Europäisches Patentamt

European Patent Office

Office européen des brevets

(19)

(11) Numéro de publication : **0 031 735**
**B1**

(12) **FASCICULE DE BREVET EUROPÉEN**

(45) Date de publication du fascicule du brevet :
09.01.85

(51) Int. Cl.⁴ : **G 01 M 15/00**

(21) Numéro de dépôt : 80401473.6

(22) Date de dépôt : 16.10.80

(54) **Procédé et dispositif hydrauliques de récupération d'énergie, sous forme électrique, pour banc d'essai de moteurs.**

(30) Priorité : 28.12.79 FR 7932037

(43) Date de publication de la demande :
08.07.81 Bulletin 81/27

(45) Mention de la délivrance du brevet :
09.01.85 Bulletin 85/02

(84) Etats contractants désignés :
AT BE CH DE GB IT LI LU NL SE

(56) Documents cités :
DE-A- 1 698 651
FR-A- 1 518 241
FR-A- 2 418 456
GB-A- 1 032 497
DIESEL ENGINEERING, volume 74, no. 797, 1978
MAIDSTONE (GB) C.R.W. BROWN "Recovering
energy from test cells" pages 104 à 107

(73) Titulaire : **Appareillages et Matériels de Servitudes
(A M S) Société anonyme
12, Rue de Chevilly La Cerisaie 108
F-94262 Fresnes Cedex (FR)**

(72) Inventeur : **Hellouin de Menibus, Olivier
Clos Bellevue
F-91150 Etampes (FR)**

(74) Mandataire : **Chambon, Georges et al
Cabinet Chambon 6 et 8 avenue Salvador Allende
F-93804 Epinay S/Seine Cédex (FR)**

Description

Les moteurs thermiques et notamment ceux de grande puissance nécessitent des essais de fonctionnement et/ou d'endurance qui sont généralement effectués en sortie de chaîne de montage.

Ces essais, pour être représentatifs des conditions d'utilisation doivent être réalisés à vitesse et couple variables, le couple de freinage étant généralement obtenu au moyen d'un frein à friction ou d'un frein électromagnétique.

L'énergie fournie par les moteurs ainsi essayés qui correspond, au rendement près des moteurs, à l'énergie dépensée, est, en général, évacuée par une circulation d'eau de refroidissement et la plupart du temps perdue.

Il est donc clair qu'une énergie considérable est ainsi gaspillée ; c'est pourquoi on a recherché à recupérer au moins une partie de cette énergie.

Toutefois, il est particulièrement difficile, pour des raisons évidentes, de réutiliser sur place l'énergie récupérée, par exemple sous forme de chaleur, et, il est apparu qu'une manière particulièrement intéressante de récupérer cette énergie consistait à la transformer en énergie de manière à pouvoir la réinjecter directement sur le réseau électrique.

Le procédé et le dispositif de mise en œuvre pour obtenir le résultat susmentionné doivent alors répondre aux critères suivants :
a) simplicité de mise en œuvre et d'entretien,
b) fiabilité,
c) large gamme de vitesse de fonctionnement (rapport 10 environ),
d) couple réglable à volonté et indépendamment de la vitesse,
e) bas prix de revient,
f) bon rendement,
g) une bonne qualité du courant électrique débité, c'est-à-dire avec une fréquence suffisamment fixe et précise et exempt d'harmoniques pour pouvoir être réinjecté sans inconvénient au réseau électrique.

Il existe à l'heure actuelle un certain nombre de techniques dont le but est de transformer la puissance mécanique d'un moteur à vitesse variable, en puissance électrique de fréquence fixe.

Pour obtenir ce résultat, il existe des procédés purement électriques et des procédés qui consistent à transmettre la puissance mécanique de l'arbre moteur qui tourne à vitesse variable sur un arbre récepteur qui tourne à vitesse fixe ou quasi fixe et à accoupler ledit arbre récepteur à un alternateur ou une génératrice asynchrone connecté au réseau électrique. Pour obtenir la vitesse fixe de l'arbre récepteur, les techniques connues sont les suivantes : variateur de vitesse mécanique, système type Ward Leonard, système hydraulique à transmission hydrostatique.

Toutefois, aucun des procédés connus susmentionnés ne peuvent satisfaire simultanément les divers critères cités ci-avant.

Le document de l'art antérieur GB-A-1032497 décrit un procédé hydraulique de récupération d'énergie, sous forme électrique, pour banc d'essai de moteurs, utilisant une pompe hydraulique volumétrique, connectée à un circuit hydraulique comportant un moteur hydraulique volumétrique, et un moteur électrique asynchrone connecté à un réseau d'alimentation électrique, ledit procédé consistant :
a) à accoupler l'arbre du moteur à essayer, qui tourne à une vitesse variable, à ladite pompe ;
b) à accoupler l'arbre du moteur asynchrone au moteur hydraulique ;
c) à alimenter hydrauliquement le moteur hydraulique par ladite pompe ;
d) à faire fonctionnner ledit moteur hydraulique d'abord en pompe actionnée par le moteur asynchrone et ensuite en moteur fournissant de l'énergie au moteur asynchrone qui devient alors génératrice.

Selon ce procédé et le dispositif de mise en œuvre connus, la pompe et/ou le moteur hydraulique ont nécessairement une cylindrée variable de manière à transmettre au moteur asynchrone une vitesse constante ou quasi constante.

Le procédé selon l'invention est caractérisé en ce qu'on utilise une pluralité de moteurs hydrauliques volumétriques branchés sur l'arbre du moteur asynchrone, en ce qu'on modifie le point c) du procédé en alimentant lesdits moteurs hydrauliques en parallèle et successivement de manière telle qu'ils soient mis en fonction moteur successivement suivant la croissance du débit de la pompe et au contraire isolés successivement suivant la décroissance dudit débit, lesdits moteurs tournant à une vitesse quasi constante, et en ce qu'on modifie le point d) du procédé en faisant fonctionner ladite pluralité des moteurs hydrauliques de telle sorte que ceux-ci, quand ils fonctionnent en pompe, sont réalimentés sur eux-mêmes et consomment une faible puissance fournie par le réseau électrique par l'intermédiaire du moteur asynchrone et ensuite deviennent moteurs, l'un après l'autre.

L'invention concerne aussi un dispositif muni d'une pompe hydraulique volumétrique, connectée à un circuit hydraulique comportant un moteur hydraulique volumétrique et un système d'alimentation du moteur hydraulique, et d'un moteur électrique asynchrone connecté à un réseau d'alimentation électrique, ladite pompe étant accouplée à l'arbre du moteur à essayer, qui tourne à une vitesse variable, ledit moteur hydraulique étant accouplé à l'arbre du moteur asynchrone, tandis que ledit moteur hydraulique est alimenté hydrauliquement par ladite pompe et fonctionne d'abord en pompe actionnée par le moteur asynchrone et ensuite en moteur fournissant de l'énergie au moteur asynchrone qui devient alors génératrice, et qui est caractérisé, selon un premier mode de réalisation, en ce que le circuit hydraulique comporte un réservoir d'huile pressurisée relié à la pompe, en ce qu'on a n moteurs hydrauliques volumétriques branchés sur l'arbre du moteur asynchrone, en ce que chacun desdits moteurs hydrauliques est branché sur une dérivation du circuit hydraulique, les dérivations étant connectées en parallèle entre elles, un premier moteur hydraulique étant branché sur la première dérivation qu'on rencontre dans le circuit hydraulique à partir de la pompe et ainsi de suite jusqu'au dernier moteur hydraulique branché sur la dernière dérivation, en ce que le système d'alimentation des moteurs hydrauliques est un système d'alimentation successif des moteurs hydrauliques pour mettre successivement ceux-ci en fonction moteur suivant la croissance du débit de la pompe et au contraire les isoler successivement en fonction de la décroissance du débit de la pompe, lesdits moteurs hydrauliques tournant à une même vitesse quasi constante, et en ce que les moteurs hydrauliques, quand ils fonctionnent en pompe, sont réalimentés sur eux-mêmes et consomment une faible puissance fournie par le réseau électrique par l'intermédiaire du moteur asynchrone.

Il est clair que dans un tel dispositif la pompe hydraulique et/ou une partie au moins des moteurs hydrauliques peuvent avoir une cylindrée variable.

Toutefois, si l'art antérieur précité nécessite obligatoirement une pompe et/ou un moteur hydraulique à cylindrée variable onéreuse, ce n'est pas le cas d'un dispositif selon l'invention qui propose dans la revendication 4 un dispositif dans lequel la pompe et les n moteurs hydrauliques ont une cylindrée fixe, les n moteurs hydrauliques sont identiques et sont munis chacun d'un clapet anti-retour monté en parallèle sur le moteur hydraulique correspondant tandis que le système d'alimentation des moteurs hydrauliques est telle que, lorsque le débit de la pompe atteint le débit d commun d'un desdits n moteurs hydrauliques, le premier de ceux-ci est alimenté, un débit double entraînant l'alimentation du premier et d'un second et ainsi de suite jusqu'à un débit n × d permettant d'alimenter, jusqu'au dernier desdits n moteurs hydrauliques, la diminution du débit de la pompe entraînant au contraire l'isolement successif desdits n moteurs hydrauliques à partir du dernier moteur hydraulique alimenté.

De préférence le système d'alimentation des n moteurs hydrauliques comporte n + 1 soupapes de limitation de pression et un moyen pour piloter lesdites soupapes à la même pression, une première soupape étant disposée en amont de la première dérivation, une dernière soupape en aval de la dernière dérivation et chacune des autres soupapes en séquence entre deux dérivations successives de telle sorte que la première soupape régule la pression de refoulement de la pompe jusqu'à ce que le débit de cette dernière atteigne le débit du premier moteur hydraulique pour lequel ladite soupape s'ouvre complètement, la deuxième soupape jouant alors le rôle de régulateur et ainsi de suite jusqu'à l'ouverture complète de l'avant dernière soupape et donc jusqu'à l'alimentation du dernier moteur hydraulique qui est régulé en pression par la dernière soupape.

Avantageusement dans ce cas les cylindrées de la pompe et des n moteurs hydrauliques sont choisies de manière telle qu'à la vitesse maximale du moteur essayé, le débit de la pompe hydraulique soit sensiblement égal à $(n + 1) \times d$.

Dans la revendication 7 est décrit un second mode de réalisation selon l'invention muni comme précédemment d'une pompe hydraulique et de n moteurs hydrauliques à cylindrée fixe branchés en parallèle et caractérisé en ce que la cylindrée de l'un des moteurs hydrauliques dénommé ci-après petit moteur est égale à la moitié de la cylindrée commune des autres moteurs hydrauliques dénommés ci-après gros moteurs dont chacun a un débit d, un clapet anti-retour étant monté en parallèle sur chaque moteur hydraulique tandis que le système d'alimentation des moteurs hydrauliques est tel que lorsque le débit de la pompe atteint le débit d/2 du petit moteur celui-ci est alimenté, un débit double d de la pompe permettant d'alimenter l'un des gros moteurs et l'arrêt de l'alimentation du petit moteur et ainsi de suite de manière telle qu'un débit de la pompe égal à un multiple pair de d/2 entraîne l'arrêt d'alimentation du petit moteur et l'alimentation d'un nombre de gros moteurs égal à la moitié de ce multiple alors qu'un débit égal à un multiple impair de d/2 permet d'alimenter le petit moteur et un nombre de gros moteurs égal à ce multiple moins 1 divisé par deux.

Avantageusement dans ce cas les cylindrées de la pompe et des n moteurs hydrauliques sont choisies de manière telle qu'à la vitesse maximale du moteur essayé, le débit de la pompe hydraulique est sensiblement égal à n × d.

De préférence aussi le système d'alimentation des moteurs hydrauliques comporte deux soupapes de limitation de pression munies d'un moyen de pilotage, ces soupapes étant disposées dans le circuit hydraulique respectivement en amont et en aval de la dérivation d'alimentation du petit moteur et une électrovanne aménagée dans chaque dérivation d'alimentation d'un gros moteur tandis que deux détecteurs de pression et de commande, en fonction du débit, respectivement pour l'ouverture et la fermeture des électrovannes sont prévus de telle sorte que la première soupape amont régule la pression de refoulement de la pompe jusqu'à ce que le débit de cette dernière atteigne le débit d/2 du petit moteur pour lequel ladite soupape s'ouvre complètement en alimentant le petit moteur avec régulation par la soupape aval, un débit double d entraînant la détection d'une perte de charge correspondant à un débit d/2 par le détecteur d'ouverture qui commande alors l'ouverture d'une première électrovanne entraînant l'alimentation d'un gros moteur, alors que la pression est régulée par ladite soupape amont, et ainsi de suite de manière telle qu'un débit de la pompe égal à un multiple pair d/2 entraîne l'ouverture d'un nombre d'électrovannes égal à la moitié de ce multiple, avec régulation de pression par la soupape amont, tandis qu'un débit égal à un multiple impair de d/2 entraîne l'ouverture de la soupape amont et donc l'alimentation du petit moteur ainsi que l'ouverture d'un nombre d'électrovannes égal à ce multiple moins 1 divisé par deux, avec régulation de pression par la soupape aval.

Les deux détecteurs de pression et de commande des électrovannes sont par exemple disposés respectivement en aval des soupapes et dans le circuit de pilotage de ces dernières pour commander respectivement l'ouverture et la fermeture des électrovannes en fonction du débit et donc permettre l'alimentation ou au contraire entraîner l'isolement des gros moteurs.

Chaque détecteur comporte avantageusement en outre un manostat pour commander respectivement l'ouverture ou la fermeture des électrovannes et une restriction destinée à actionner ledit manostat en créant une perte de charge suffisante selon le débit.

De préférence, selon les deux modes de réalisation susmentionnés, le circuit hydraulique comporte en outre un échangeur de chaleur huile-eau ou huile-air destiné à évacuer la faible puissance dissipée sous forme de chaleur, ainsi qu'un filtre disposé sur le retour au réservoir.

La figure 1 représente schématiquement un premier mode de réalisation selon l'invention comportant trois moteurs hydrauliques,

la figure 2 montre la courbe théorique de la puissance récupérée au moyen du mode de réalisation représenté à la figure 1, pour un couple moteur constant,

la figure 3 représente schématiquement un second mode de réalisation selon l'invention,

la figure 4 montre la courbe théorique de la puissance récupérée au moyen du mode de réalisation représenté à la figure 3, pour un couple moteur constant.

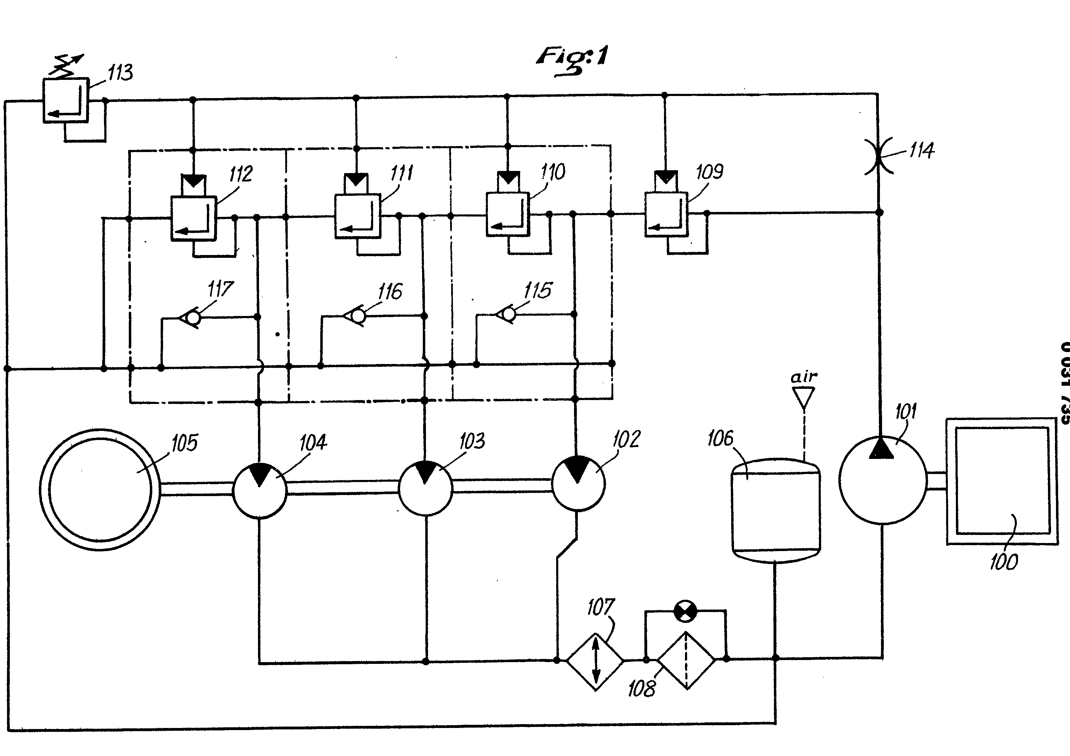

La figure 1 montre un premier mode de réalisation qui comporte essentiellement un équipage moteur et un équipage récepteur.

L'équipage moteur comprend un moteur thermique 100 en essai accouplé à une pompe hydraulique volumétrique 101 à cylindrée fixe. Cet ensemble tourne à vitesse variable selon les conditions d'essai du moteur 100.

L'équipage récepteur comprend une pluralité de moteurs hydrauliques volumétriques, dans cet exemple trois 102, 103, et 104 qui sont à cylindrée fixe et tous identiques.

Les trois moteurs sont accouplés entre eux et l'ensemble est accouplé à un moteur (génératrice) asynchrone 105 raccordé au réseau d'alimentation électrique.

Les moteurs 102 à 104 sont branchés chacun sur une dérivation du circuit hydraulique de la pompe 101, les dérivations étant connectées en parallèle entre elles. Le circuit hydraulique comporte en outre un réservoir d'huile 106 pressurisé à l'air, un échangeur de chaleur huile-eau ou huile-air 107 destiné à évacuer la faible puissance dissipée sous forme de chaleur et un filtre 108 disposé sur le retour au réservoir.

Le système d'alimentation des moteurs hydrauliques comporte quatre soupapes de limitation de pression à pilotage et drain externe 109, 110, 111, 112, c'est-à-dire n + 1 soupapes si n représente le nombre de moteurs, une première soupape 109 étant disposée en amont de la première dérivation, une dernière soupape 112 en aval de la dernière dérivation et chacune des autres soupapes 110, 111 en séquence entre deux dérivations successives.

Les soupapes 109 à 112 sont pilotées par une valve de pilotage 113 qui est disposée dans le circuit par l'intermédiaire d'une restriction de pilotage 114 de manière à alimenter et commander lesdites soupapes. Ces dernières sont réglées à la même pression et ont la particularité de s'ouvrir lorsque leur pression aval est égale à leur pression amont.

Chaque moteur 102, 103 et 104 est en outre muni d'un clapet anti-retour, respectivement 115, 116 et 117, monté en parallèle sur le moteur correspondant.

Le fonctionnement de ce premier mode de réalisation est le suivant :

Dès la mise en route du moteur électrique 105, chacun des moteurs hydrauliques 102, 103 et 104 travaille en pompe et se réalimente lui-même au moyen de son clapet anti-retour 115, 116 et 117.

Il est clair que l'équipage récepteur consomme alors une très faible puissance électrique.

Lorsque l'équipement moteur est mis en route à faible vitesse, la pression de refoulement de la pompe, donc le couple, est régulée par la première soupape 109.

Lorsque la vitesse du moteur 100 est telle que le débit de la pompe 101 dépasse le débit d du premier moteur hydraulique 102, la soupape 109 s'ouvre complètement, le clapet anti-retour 115 se ferme et le moteur 102 fournit alors de l'énergie au moteur électrique 105 qui devient génératrice, les deux autres moteurs 103 et 104 fonctionnant toujours en pompe.

Lorsque la soupape 109 est complètement ouverte, c'est la soupape 110 qui régule la pression qui reste ainsi pratiquement inchangée.

L'augmentation progressive de la vitesse du moteur 100 entraînera une augmentation du débit et l'ouverture successive des soupapes 109, 110 et 111 de manière telle que les moteurs 102, 103 et 104 fourniront alors de l'énergie au réseau par l'intermédiaire du moteur électrique 105 fonctionnant en génératrice. A l'inverse, une diminution de la vitesse entraînera automatiquement l'isolement successif des moteurs du circuit haute pression tout en conservant un couple constant.

L'équipage récepteur doit évidemment tourner à une vitesse quasi constante qui dépend de la fréquence du réseau électrique et du nombre de paires de pôles du moteur 105. Les cylindrées de la pompe 101 et des moteurs 102, 103 et 104 seront choisies de manière à respecter la condition mentionnée ci-avant. En outre et de préférence, les cylindrées seront choisies de manière telle qu'à la vitesse maximale du moteur thermique 100 le débit de la pompe hydraulique 101 soit égal à environ (n + 1) fois (ici 4) celui d'un seul moteur hydraulique.

Avec un tel dispositif, toute l'énergie n'est pas entièrement transmise au réseau électrique. Le rendement du système dépend d'une part, des pertes propres à chaque élément utilisé et, d'autre part, des pertes intrinsèques au système.

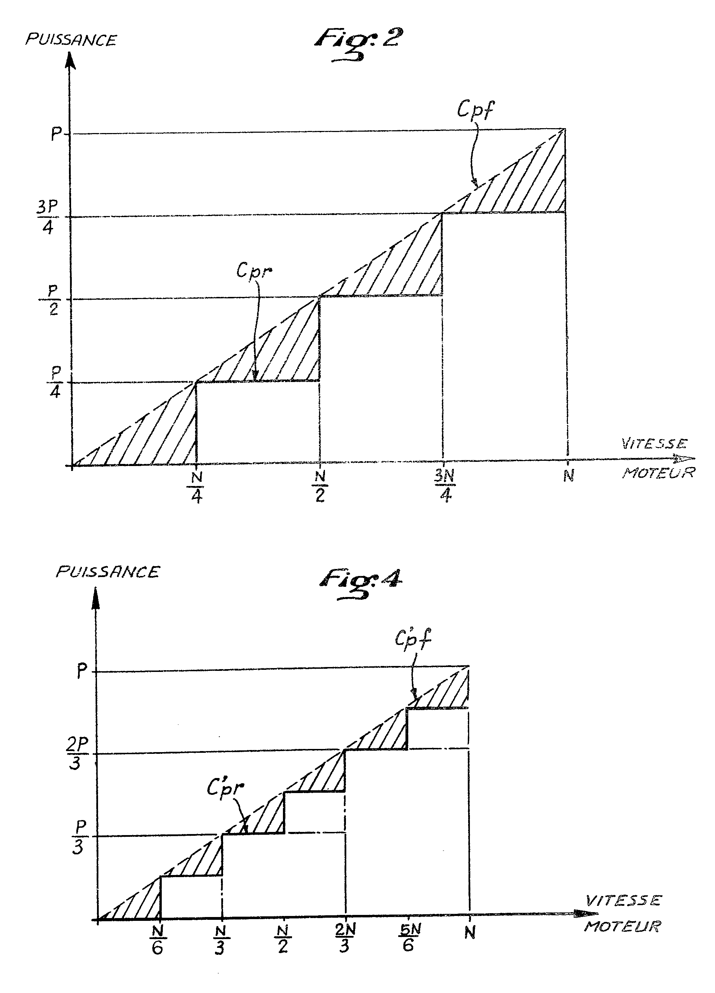

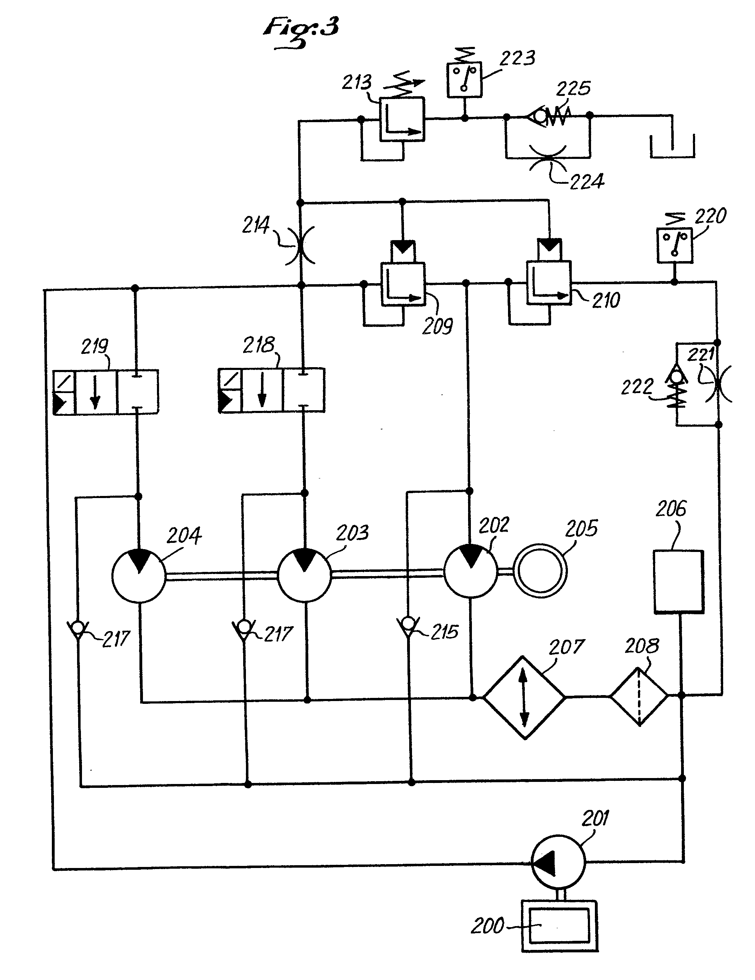

La figure 2 montre la courbe Cpf de puissance fournie et la courbe théorique Cpr de puissance recueillie en fonction de la vitesse de l'équipage moteur, à couple constant et pour un dispositif à trois moteurs hydrauliques du type décrit à propos de la figure 1.

Dans cette figure, N représente la vitesse maximale de l'équipage moteur. La cylindrée des moteurs étant choisie comme il a été dit ci-avant, le premier moteur 102 fournira de l'énergie pour une vitesse de l'équipage voisine de N/(n + 1) soit ici N/4 (la zone hachurée représente la puissance perdue).

Cette figure montre bien la récupération théorique en escalier d'où l'on tire le rendement qui est dans cet exemple de 3/4 et plus généralement de n/(n + 1), intégré entre la vitesse zéro et la vitesse maximale N.

La formule du rendement théorique montre que celui-ci croît avec le nombre de moteurs utilisés. Toutefois, il ne semble pas intéressant d'augmenter ce nombre au-delà de quatre ou cinq car le gain théorique de puissance recueillie deviendrait négligeable par rapport aux pertes hydrauliques dues aux moteurs supplémentaires et au coût de revient supplémentaire de l'installation.

En outre, il est possible que, pour les essais ou les utilisations envisagées, certaines vitesses soient plus fréquemment utilisées. Dans ce cas, les cylindrées des moteurs hydrauliques seront choisies de façon à travailler le plus souvent possible au voisinage du meilleur rendement.

Le dispositif décrit ci-avant répond particulièrement bien aux critères recherchés et mentionnés ci-avant. Et plus particulièrement on peut noter la simplicité de sa conception et celle des éléments utilisés ainsi que la facilité de sa mise en œuvre.

Le seul réglage est le couple qui reste stable quelle que soit la vitesse et qui est réglable au moyen de la valve de pilotage 113. Ce dispositif permet notamment d'effectuer des essais dans une gamme de vitesse d'un rapport supérieur à 10.

Toutefois, il est possible d'améliorer encore le rendement de récupération avec un dispositif comportant le même nombre de moteurs hydrauliques. Pour atteindre ce but, l'invention propose un second mode de réalisation schématisé à la figure 3.

La figure 3 montre en effet un dispositif qui comporte, comme dans le dispositif de la figure 1, un moteur à essayer 200, une pompe hydraulique volumétrique 201 à cylindrée fixe, trois moteurs hydrauliques 202, 203 et 204 également à cylindrée fixe, un moteur électrique asynchrone 205, un réservoir d'huile 206 également pressurisé, un échangeur de chaleur 207, un filtre 208, trois clapets anti-retour 215, 216 et 217 montés en parallèle respectivement sur les moteurs 202, 203 et 204.

Par contre, ce mode de réalisation ne comporte que deux soupapes de limitation de pression 209 et 210 disposées respectivement en amont et en aval de la dérivation du moteur 202.

En outre, le moteur 202 présente une cylindrée qui est égale à la moitié de la cylindrée commune des deux autres moteurs 203 et 204.

Les dérivations d'alimentation des moteurs 203 et 204 sont respectivement munies d'électrovannes 218 et 219 qui sont commandées comme il sera dit ci-après.

Les soupapes 209 et 210 sont pilotées par une valve de pilotage 213 reliée au circuit par la restriction 214, tandis que, d'une part un manostat 220, une restriction 221 munie d'un clapet de charge 222 sont disposés dans le circuit à la suite de la soupape 210 et que, d'autre part, un manostat 223, une restriction 224 munie d'un clapet de charge 225 sont disposés à la suite de la valve de pilotage 213.

Dans ce dispositif dont l'équipage moteur est semblable à celui de la figure 1, le petit moteur hydraulique 202 est alimenté également de la même façon que le moteur 102 de la figure 1.

Etant donné que la cylindrée du moteur 202 est égale à la moitié de celle des deux autres moteurs, son débit sera aussi égal à la moitié de celui des autres moteurs, soit dans ce qui suit d/2.

Pour un débit d/2 de la pompe 201, la soupape 209 s'ouvre et le moteur 202 est alimenté, la pression étant alors régulée par la soupape 210.

Lorsque le débit atteint la valeur double d, un débit d/2 circule dans la restriction 221, le clapet 222 restant fermé. La restriction 221 crée alors pour ce débit d/2 une perte de charge suffisante pour actionner le manostat 220 qui commande à son tour l'ouverture de l'électrovanne 219 (ou 218) provoquant ainsi l'alimentation du moteur 204 (ou 203), tandis que la pression est régulée par la soupape 209.

Le rôle du clapet 222 est de limiter la pression en aval de la soupape 210 lorsque le débit dans le circuit devient important. Un débit de (3 d)/2 ouvrira de nouveau 209, un débit de 2 d ouvrira l'électrovanne 218 (ou 219) et un débit de (5 d)/2 ouvrira encore 209 de telle sorte que les débits de : d/2, d, (3 d)/2, 2 d et (5 d)/2 mettront respectivement en fonction le moteur 202 seul, le moteur 204 (ou 203) seul, les moteurs 202 et 204 (ou 203), les moteurs 204 et 203 et enfin les trois moteurs 202, 203 et 204.

En sens inverse, lorsque le débit devient inférieur à (5 d)/2 le moteur 202 s'isole automatiquement et la pression est régulée par la soupape 209. Si le débit devient inférieur à 2 d la pression a tendance à chuter, au-dessous de la valeur réglée par la valve 213 et le débit qui circule dans la restriction 224 s'annule, ce qui entraîne une chute de pression en aval de 213 et un actionnement du manostat 223 qui commande alors la fermeture de l'électrovannne 218 et donc l'isolement du moteur 203. Le petit moteur 202 redevient fournisseur d'énergie et ainsi de suite selon la décroissance du débit.

La figure 4 montre la courbe C'pr théorique de puissance récupérée, et la courbe C'pf de puissance fournie, en fonction de la vitesse du moteur et à couple constant, dans le cas d'un dispositif à trois moteurs du type décrit à propos de la figure 3 (N étant égal à la vitesse maximale du moteur essayé).

En outre, les cylindrées sont choisies comme il a été dit ci-avant de manière telle qu'à la vitesse maximale N du moteur, le débit de la pompe hydraulique soit sensiblement égal à n.fois le débit d d'un gros moteur 203 et 204 (ou 2.n.fois le débit d/2 du moteur 202). C'est pourquoi le petit moteur fournira de l'énergie à partir d'une vitesse N/6 et le moteur 204 à partir d'une vitesse N/3.

Il est clair que le rendement obtenu est égal ici à 5/6, le rendement pour n moteurs étant égal à $[2(n-1)]/(2 n)$. Ce rendement est évidemment meilleur que celui du premier mode de réalisation décrit. Pour obtenir avec le premier mode, le même rendement théorique moyen qu'avec le second utilisant n moteurs, il faudrait utiliser $2 n - 1$ moteurs.

Il est donc possible d'améliorer le rendement des dispositifs en augmentant le nombre des moteurs, mais il est aussi possible d'imaginer un dispositif muni de plusieurs petits moteurs dont les cylindrées seraient égales à des fractions de celles des gros moteurs de manière à tendre vers un rendement théorique de 1, c'est-à-dire à rapprocher le plus possible la courbe de puissance récupérée de la courbe de puissance fournie.

En outre, et selon un autre mode de réalisation de l'invention, la pompe volumétrique et/ou au moins une partie des moteurs, peuvent avoir une cylindrée variable.

**Revendications**

1. Procédé hydraulique de récupération d'énergie, sous forme électrique, pour banc d'essai de moteurs, utilisant une pompe hydraulique volumétrique, connectée à un circuit hydraulique comportant un moteur hydraulique, volumétrique, et un moteur électrique asynchrone connecté à un réseau d'alimentation électrique, ledit procédé consistant :

a) à accoupler l'arbre du moteur à essayer, qui tourne à une vitesse variable, à ladite pompe,

b) à accoupler l'arbre du moteur asynchrone au moteur hydraulique,

c) à alimenter hydrauliquement le moteur hydraulique par ladite pompe,

d) à faire fonctionner ledit moteur hydraulique d'abord en pompe actionnée par le moteur asynchrone et ensuite en moteur fournissant de l'énergie au moteur asynchrone qui devient alors génératrice, caractérisé en ce qu'on utilise une pluralité de moteurs hydrauliques volumétriques branchés sur l'arbre du moteur asynchrone, en ce qu'on modifie le point c) du procédé en alimentant lesdits moteurs hydrauliques en parallèle et successivement de manière telle qu'ils soient mis en fonction moteur successivement suivant la croissance du débit de la pompe et au contraire les isolés successivement suivant la décroissance dudit débit, lesdits moteurs tournant à une même vitesse quasi constante, et en ce qu'on modifie le point d) du procédé en faisant fonctionner ladite pluralité des moteurs hydrauliques de telle sorte que ceux-ci, quand ils fonctionnent en pompe, sont réalimentés sur eux-mêmes et consomment une faible puissance fournie par le réseau électrique par l'intermédiaire du moteur asynchrone et ensuite deviennent moteurs, l'un après l'autre.

2. Dispositif hydraulique de récupération d'énergie, sous forme électrique, pour banc d'essai de moteurs, muni d'une pompe hydraulique volumétrique (101), connectée à un circuit hydraulique comportant un moteur hydraulique volumétrique et un système d'alimentation du moteur hydraulique, et d'un moteur électrique asynchrone (105) connecté à un réseau d'alimentation électrique, ladite pompe étant accouplée à l'arbre du moteur à essayer (100), qui tourne à une vitesse variable, ledit moteur hydraulique étant accouplé à l'arbre du moteur asynchrone, tandis que ledit moteur hydraulique est alimenté hydrauliquement par ladite pompe et fonctionne d'abord en pompe actionnée par le moteur asynchrone et ensuite en moteur fournissant de l'énergie au moteur asynchrone qui devient alors génératrice, dispositif caractérisé en ce que le circuit hydraulique comporte un réservoir d'huile pressurisé (106) relié à la pompe (101), en ce qu'on a n moteurs hydrauliques volumétriques (102 à 104) branchés sur l'arbre du moteur asynchrone, en ce que chacun desdits moteurs hydrauliques est branché sur une dérivation du circuit hydraulique, les dérivations étant connectées en parallèle entre elles, un premier moteur hydraulique (102) étant branché sur la première dérivation qu'on rencontre dans le circuit hydraulique à partir de la pompe (101) et ainsi de suite jusqu'au dernier moteur hydraulique (104) branché sur la dernière dérivation, en ce que le système d'alimentation des moteurs hydrauliques est un système d'alimentation successif des moteurs hydrauliques pour mettre successivement ceux-ci en fonction moteur suivant la croissance du débit de la pompe et au contraire les isoler successivement en fonction de la décroissance du débit de la pompe, lesdits moteurs hydrauliques tournant à une même vitesse quasi constante, et en ce que les moteurs hydrauliques, quand ils fonctionnent en pompe, sont réalimentés sur eux-mêmes et consomment une faible puissance fournie par le réseau électrique par l'intermédiaire du moteur asynchrone.

3. Dispositif selon la revendication 2, caractérisé en ce que la pompe hydraulique (101) et/ou une partie au moins des moteurs hydrauliques (102 à 104) ont une cylindrée variable.

4. Dispositif selon la revendication 2, caractérise en ce que la pompe (101) et les n moteurs hydrauliques (102, 103, 104) ont une cylindrée fixe, que les n moteurs hydrauliques sont identiques et sont munis chacun d'un clapet anti-retour (115, 116, 117) monté en parallèle sur le moteur hydraulique correspondant tandis que le système d'alimentation des moteurs hydrauliques est telle que, lorsque le débit de la pompe atteint le débit d commun d'un desdits n moteurs hydrauliques, le premier (102) de ceux-ci est alimenté, un débit double entraînant l'alimentation du premier (102) et d'un second (103) et ainsi de suite jusqu'à un débit n × d permettant d'alimenter, jusqu'au dernier (104) desdits n moteurs hydrauliques, la diminution du débit de la pompe entraînant au contraire l'isolement successif desdits n moteurs hydrauliques à partir du dernier moteur hydraulique alimenté.

5. Dispositif selon la revendication 4, caractérisé en ce que le système d'alimentation des n moteurs hydrauliques comporte n + 1 soupapes (109, 110, 111, 112) de limitation de pression et un moyen (113) pour piloter lesdites soupapes à la même pression, une première soupape (109) étant disposée en amont de la première dérivation, une dernière soupape (112) en aval de la dernière dérivation et chacune des autres soupapes (110, 111) en séquence entre deux dérivations successives, de telle sorte que la première soupape (109) régule la pression de refoulement de la pompe (101) jusqu'à ce que le débit de cette dernière atteigne le débit du premier moteur hydraulique (102) pour lequel ladite soupape s'ouvre complètement, la deuxième soupape (110) jouant alors le rôle de régulateur et ainsi de suite jusqu'à l'ouverture complète de l'avant dernière soupape (111) et donc jusqu'à l'alimentation du dernier moteur hydraulique (104) qui est régulé en pression par la dernière soupape (112).

6. Dispositif selon l'une des revendications 4 et 5, caractérisé en ce que les cylindrées de la pompe (101) et des n moteurs hydrauliques (102 à 104) sont choisies de manière telle qu'à la vitesse maximale du moteur essayé (100) le débit de la pompe hydraulique soit sensiblement égal à (n + 1) × d.

7. Dispositif hydraulique de récupération d'énergie, sous forme électrique, pour banc d'essai de moteurs, muni d'une pompe hydraulique volumétrique (201), connectée à un circuit hydraulique comportant un moteur hydraulique volumétrique et un système d'alimentation du moteur hydraulique, et d'un moteur électrique asynchrone (205) connecté à un réseau d'alimentation électrique, ladite pompe étant accouplée à l'arbre du moteur à essayer (200), qui tourne à une vitesse variable, ledit moteur hydraulique étant accouplé à l'arbre du moteur asynchrone tandis que ledit moteur hydraulique est alimenté hydrauliquement par ladite pompe et fonctionne d'abord en pompe actionnée par le moteur asynchrone et ensuite en moteur fournissant de l'énergie au moteur asynchrone qui devient alors génératrice, dispositif caractérisé en ce que le circuit hydraulique comporte un réservoir d'huile pressurisé (206) relié à la pompe (201), en ce qu'on a n moteurs hydrauliques volumétriques (202 à 204) branchés sur l'arbre du moteur asynchrone, en ce que chacun desdits moteurs hydrauliques est branché sur une dérivation du circuit hydraulique, les dérivations étant connectées en parallèle entre elles, un premier moteur hydraulique (204) étant branché sur la première dérivation qu'on rencontre dans le circuit hydraulique à partir de la pompe et ainsi de suite jusqu'au dernier moteur hydraulique (202) branché sur la dernière dérivation, en ce que la pompe (201) et les n moteurs hydrauliques ont une cylindrée fixe, la cylindrée de l'un des moteurs hydrauliques (202) dénommé ci-après petit moteur étant égale à la moitié de la cylindrée commune des autres moteurs hydrauliques (203 et 204) dénommés ci-après gros moteurs dont chacun a un débit d, un clapet anti-retour (215, 216, 217) étant monté en parallèle sur chaque moteur hydraulique tandis que le système d'alimentation des moteurs hydrauliques est tel que lorsque le débit de la pompe (201) atteint le débit d/2 du petit moteur (202) celui-ci est alimenté, un débit double d de la pompe permettant d'alimenter l'un des gros moteurs (203 ou 204) et l'arrêt de l'alimentation du petit moteur et ainsi de suite de manière telle qu'un débit de la pompe égal à un multiple pair de d/2 entraîne l'arrêt d'alimentation du petit moteur et l'alimentation d'un nombre de gros moteurs égal à la moitié de ce multiple alors qu'un débit égal à un multiple impair de d/2 permet d'alimenter le petit moteur et un nombre de gros moteurs égal à ce multiple moins 1 divisé par deux.

8. Dispositif selon la revendication 7, caractérisé en ce que les cylindrées de la pompe (201) et des n moteurs hydrauliques (202 à 204) sont choisies de manière telle qu'à la vitesse maximale du moteur essayé (200), le débit de la pompe hydraulique est sensiblement égal à n × d.

9. Dispositif selon l'une des revendications 7 et 8, caractérisé en ce que le système d'alimentation des moteurs hydrauliques comporte deux soupapes de limitation de pression (209, 210) munies d'un moyen de pilotage (213), ces soupapes étant disposées dans le circuit hydraulique respectivement en amont et en aval de la dérivation d'alimentation du petit moteur (202) et une électrovanne (218, 219) aménagée dans chaque dérivation d'alimentation d'un gros moteur (203, 204) tandis que deux détecteurs de pression et de commande, en fonction du débit, respectivement pour l'ouverture et la fermeture des électrovannes sont prévus de telle sorte que la soupape amont (209) régule la pression de refoulement de la pompe (201) jusqu'à ce que le débit de cette dernière atteigne le débit d/2 du petit moteur (202) pour lequel ladite soupape s'ouvre complètement en alimentant le petit moteur avec régulation par la soupape aval (210), un débit double d entraînant la détection d'une perte de charge correspondant à un débit d/2 par le détecteur d'ouverture qui commande alors l'ouverture d'une première électrovanne (218 ou 219) entraînant l'alimentation d'un gros moteur (203 ou 204), alors que la pression est régulée par ladite soupape amont, et ainsi de suite de manière telle qu'un débit de la pompe égal à un multiple pair de d/2 entraîne l'ouverture d'un nombre d'électrovannes égal à la moitié de ce multiple, avec régulation de pression par la soupape amont (209), tandis qu'un débit égal à un multiple impair de d/2 entraîne l'ouverture de la soupape amont (209) et donc l'alimentation du petit moteur ainsi que l'ouverture d'un nombre d'électrovannes égal à ce multiple moins 1 divisé par deux, avec régulation de pression par la soupape aval (210).

10. Dispositif selon la revendication 9, caractérisé en ce que les deux détecteurs de pression et de commande des électrovannes sont disposés respectivement en aval des soupapes (209 et 210) et dans le circuit de pilotage de ces dernières pour commander respectivement l'ouverture et la fermeture des électrovannes en fonction du débit et donc permettre l'alimentation ou au contraire entraîner l'isolement des gros moteurs.

11. Dispositif selon la revendication 10, caractérisé en ce que chaque détecteur comporte un manostat (220, 223) pour commander respectivement l'ouverture ou la fermeture des électrovannes (218, 219) et une restriction (221, 225) destinée à actionner ledit manostat en créant une perte de charge suffisante selon le débit.

12. Dispositif selon l'une des revendications 2 à 11, caractérisé en ce que le circuit hydraulique comporte en outre un échangeur de chaleur huile-eau (107, 207) ou huile-air destiné à évacuer la faible puissance dissipée sous forme de chaleur, ainsi qu'un filtre (108, 208) disposé sur le retour au réservoir (106, 206).

**Claims**

1. A hydraulic method for recovering the energy of a motor test bed in electrical form using a volumetric hydraulic pump connected to a hydraulic circuit comprising a volumetric hydraulic motor and an asynchronous electric motor connected to an electricity supply system, said method consisting in :

a) coupling the shaft of the motor being tested, which rotates at variable speed, to said pump,

b) coupling the shaft of the asynchronous motor to the hydraulic motor,

c) feeding the hydraulic motor hydraulically by said pump,

d) operating said hydraulic motor initially as a pump driven by the asynchronous motor and then as a motor supplying energy to the asynchronous motor which then becomes a generator,

characterised in that a plurality of volumetric hydraulic motors connected to the shaft of the asynchronous motor is used, in that point c) of the method is modified by feeding said hydraulic motors in parallel and in succession such that they are successively made to operate as motors as the delivery of the pump increases and, conversely, successively isolated as said delivery decreases, said motors turning at the same substantially constant speed, and in that point d) of the method is modified by operating said plurality of hydraulic motors such that, when they operate

as pumps, they are partially powered by their own surplus output* and consume a small amount of power supplied by the electricity supply system through the intermediary of the asynchronous motor and then become motors, one after another.

2. Hydraulic device for recovering the energy of a motor test bed in electrical form equipped with a volumetric hydraulic pump (101) connected to a hydraulic circuit comprising a volumetric hydraulic motor and a system for supplying the hydraulic motor, and with an asynchronous electric motor (105) connected to an electricity supply system, said pump being coupled to the shaft of the motor being tested (100) turning at a variable speed, said hydraulic motor being coupled to the shaft of the asynchronous motor while said hydraulic motor is fed hydraulically by said pump and operates initially as a pump driven by the asynchronous motor and then as a motor supplying energy to the asynchronous motor which then becomes a generator, said device being characterised in that the hydraulic circuit comprises a pressurised oil reservoir (106) connected to the pump (101), in that n volumetric hydraulic motors (102 to 104) are connected to the shaft of the asynchronous motor, in that each of said hydraulic motors is connected to a branch of the hydraulic circuit, the branches being interconnected in parallel, a first hydraulic motor (102) being connected to the first branch in the hydraulic circuit from the pump (101) and so on to the last hydraulic motor (104) connected to the last branch, in that the feed system for the hydraulic motors is a system successively feeding the hydraulic motors so as to operate them successively as motors as the delivery of the pump increases and, conversely, successively isolate them as the delivery of the pump decreases, said hydraulic motors turning at the same substantially constant speed, and in that, when they operate as pumps, the hydraulic motors are partially powered by their own surplus output* and consume a small amount of power supplied by the electricity system through the intermediary of the asynchronous motor.

3. Device as in Claim 2, characterised in that the hydraulic pump (101) and/or at least part of the hydraulic motors (102 to 104) have a variable displacement.

4. Device as in Claim 2, characterised in that the pump (101) and the n hydraulic motors (102, 103, 104) have a fixed displacement, in that the n hydraulic motors are identical and are each fitted with a non-return valve (115, 116, 117) mounted in parallel on the corresponding hydraulic motor whereas the system feeding the hydraulic motors is such that, when the delivery of the pump reaches the common delivery d of one of said n hydraulic motors, the first (102) of these is fed, a doubled delivery resulting in the feeding of the first (102) and a second (103) and so on up to a

* Translator's note : Literal translation « are fed back on themselves » is meaningless.

delivery n × d allowing feeding of up to the last (104) of said n hydraulic motors, reduction in the delivery of the pump resulting, conversely, in the successive isolation of said n hydraulic motors starting with the last hydraulic motor fed.

5. Device as in Claim 4, characterised in that the system feeding the n hydraulic motors comprises n + 1 pressure limiting valves (109, 110, 111, 112) and a means (113) to control said valves at the same pressure, a first valve (109) being disposed upstream of the first branch, a last valve (112) downstream of the last branch and each of the other valves (110, 111) in sequence between two successive branches such that the first valve (109) regulates the delivery pressure of the pump (101) until the delivery of the latter reaches the delivery of the first hydraulic motor (102) at which said valve opens completely, the second valve (110) then playing the part of regulator and so on until the penultimate valve (111) is fully opened and thus until the last hydraulic motor (104) is fed, its pressure being regulated by the last valve (112).

6. Device as in one of Claims 4 and 5, characterised in that the displacements of the pump (101) and the n hydraulic motors (102 to 104) are selected such that the delivery of the hydraulic pump is substantially equal to (n + 1) × d at the maximum speed of the motor (100) being tested.

7. Hydraulic device for recovering the energy of a motor test bed in electrical form equipped with a volumetric hydraulic pump (201) connected to a hydraulic circuit comprising a volumetric hydraulic motor and a system feeding the hydraulic motor, and with an asynchronous electric motor (205) connected to an electricity supply system, said pump being coupled to the shaft of the motor (200) being tested, turning at a variable speed, said hydraulic motor being coupled to the shaft of the asynchronous motor while said hydraulic motor is fed hydraulically by said pump and operates initially as a pump driven by the asynchronous motor and then as a motor supplying energy to the asynchronous motor which then becomes a generator, said device being characterised in that the hydraulic circuit comprises a pressurised oil reservoir (206) connected to the pump (201), in that n volumetric hydraulic motors (202 to 204) are connected to the shaft of the asynchronous motor, in that each of the said hydraulic motors is connected to a branch of the hydraulic circuit, the branches being interconnected in parallel, a first hydraulic motor (204) being connected to the first branch in the hydraulic circuit from the pump and so on up to the last hydraulic motor (202) connected to the last branch, in that the pump (201) and the n hydraulic motors have a fixed displacement, the displacement of one of the hydraulic motors (202), referred to hereinafter as the small motor, being equal to half the displacement common to the other hydraulic motors (203 and 204), referred to hereinafter as the large motors, each having a delivery d, a non-return valve (215, 216, 217) being mounted in parallel on each hydraulic motor while the system feeding the hydraulic motors is such that when the delivery of the pump (201) reaches the delivery d/2 of the small motor (202), this is fed, a doubled pump delivery d making it possible to feed one of the large motors (203 or 204) and stop feeding the small motor and so on such that a pump delivery equal to an even multiple of d/2 results in the feed to the small motor being stopped and the feeding of a number of large motors equal to half this multiple whereas a delivery equal to an odd multiple of d/2 allows feeding of the small motor and a number of large motors equal to this multiple less 1 divided by 2.

8. Device as in Claim 7, characterised in that the displacements of the pump (201) and the n hydraulic motors (202 to 204) are selected such that the delivery of the hydraulic pump is essentially equal to n × d at the maximum speed of the motor (200) being tested.

9. Device as in one of Claims 7 and 8, characterised in that the system feeding the hydraulic motors comprises two pressure limiting valves (209, 210) equipped with a control means (213), these valves being disposed in the hydraulic circuit respectively upstream and downstream of the branch feeding the small motor (202) and a solenoid valve (218, 219) provided in each branch feeding a large motor (203, 204) while two detectors for pressure and control, as a function of delivery, respectively for opening and closing the solenoid valves, are provided such that the upstream valve (209) regulates the delivery pressure of the pump (201) until the delivery of the latter reaches the delivery d/2 of the small motor (202) at which said pump opens completely feeding the small motor, regulated by the downstream valve (210), a doubled delivery d resulting in the detection of a loss of head corresponding to a delivery d/2 by the opening detector which then controls the opening of a first solenoid valve (218 or 219) resulting in a large motor (203 or 204) being fed, while the pressure is regulated by said upstream valve, and so on such that a pump delivery equal to an even multiple of d/2 results in the opening of a number of solenoid valves equal to half of this multiple, the pressure being regulated by the upstream valve (209), whereas a delivery equal to an odd multiple of d/2 results in the opening of the upstream valve (209) and thus the feeding of the small motor and the opening of a number of solenoid valves equal to this multiple less 1 divided by 2, the pressure being regulated by the downstream valve (210).

10. Device as in Claim 9, characterised in that the two pressure and control detectors of the solenoid valves are disposed respectively downstream of the valves (209 and 210) and in the control circuit of the latter to control respectively the opening and closure of the solenoid valves as a function of the delivery and thus permit the of the large motors.

11. Device as in Claim 10, characterised in that each detector comprises a pressure switch (220, 223) to control respectively the opening or the closure of the solenoid valves (218, 219) and a restriction (221, 225) designed to activate said pressure switch by creating a sufficient loss of head according to the delivery.

12. Device as in one of Claims 2 to 11, characterised in that the hydraulic circuit also comprises an oil-water heat exchanger (107, 207) or an oil-air heat exchanger designed to remove the small amount of energy dissipated in the form of heat, and a filter (108, 208) disposed on the return to the reservoir (106, 206).

Ansprüche

1. Hydraulisches Verfahren zur Wiedergewinnung der Energie eines Motorprüfstandes in Form elektrischer Energie unter Verwendung einer hydraulischen Verdrängerpumpe, die mit einem einen hydraulischen Verdrängermotor enthaltenden Hydraulikkreis verbunden ist und unter Verwendung einer am elektrischen Versorgungsnetz angeschlossenen elektrischen Asynchronmaschine, bestehend aus folgenden Verfahrensschritten :

a) Ankuppeln der sich mit einer variablen Geschwindigkeit drehenden Welle des Prüfmotors an die Pumpe,

b) Ankuppeln der Welle des Asynchronmaschine an den Hydraulikmotor,

c) hydraulisches Speisen des Hydraulikmotors durch die Pumpe,

d) Freigeben des Hydraulikmotors zunächst als durch die Asynchronmaschine angetriebene Pumpe und dann als der Asynchronmaschine Energie liefernder Motor, so daß dieser dann als Generator arbeitet,

dadurch gekennzeichnet, daß eine Mehrzahl von mit der Welle der Asynchronmaschine verbundene hydraulische Verdrängermotoren verwendet werden, daß der Verfahrensschritt c) dahingehend modifiziert wird, daß die parallel geschalteten Hydraulikmotoren derart aufeinanderfolgend gespeist werden, daß sie bei steigender Pumpleistung aufeinanderfolgend in Funktion gebracht werden und umgekehrt bei fallender Pumpleistung nacheinander abgeschaltet werden, wobei diese Motoren sich einheitlich mit einer quasi-konstanten Geschwindigkeit drehen, und daß der Verfahrensschritt d) dahingehend modifiziert wird, daß die hydraulischen Motoren derart wirksam gemacht werden, daß diese, wenn sie als Pumpe funktionieren, rückgespeist sind auf sich selbst und nur eine geringe Leistung vom elektrischen Netz über die Zwischenschaltung der Asynchronmaschine verbrauchen und aufeinanderfolgend zu Motore werden.

2. Hydraulische Anordnung zur Wiedergewinnung der Energie eines Motorprüfstandes in Form elektrischer Energie unter Verwendung einer hydraulischen Verdrängerpumpe (101), die mit einem einen hydraulischen Verdrängermotor enthaltenden Hydraulikkreis verbunden ist, und unter Verwendung einer elektrischen Asynchronmaschine (105), die ihrerseits mit einem elektrischen Versorgungsnetz verbunden ist, wobei die Pumpe angekoppelt ist an die Welle des zu prüfenden Motors (100), die sich mit einer variablen Geschwindigkeit dreht, und der hydraulische Motor angekoppelt ist an die Welle der Asynchronmaschine, während der Hydraulikmotor hydraulisch gespeist wird von der Pumpe und zunächst als von der Asynchronmaschine angetriebene Pumpe und dann als der Asynchronmaschine energieliefernder Motor arbeitet, so daß diese als Generator arbeitet, dadurch gekennzeichnet, daß der Hydraulikkreis einen Drucköl behälter (106) enthält, der mit der Pumpe (101) verbunden ist, daß n hydraulische Verdrängermotoren (102 bis 104) auf der Welle der Asynchronmaschine angeordnet sind, daß jeder der Hydraulikmotoren über eine eigene Abzweigleitung mit dem Hydraulikkreis verbunden ist, wobei die Abzweigleitungen parallel untereinander geschaltet sind und ein erster Hydraulikmotor (102) angeschlossen ist über eine erste Abzweigleitung, die in dem hydraulischen Kreis von der Pumpe (101) gespeist wird und so weiter bis zum letzten Hydraulikmotor (104), der über die letzte Abzweigleitung angeschlossen ist, daß das Speisesystem der Hydraulikmotoren ein aufeinanderfolgendes System der Motoren ist zum aufeinanderfolgenden Einschalten der Motore in Funktion des Ansteigens der Leistung der Pumpe und umgekehrt des aufeinanderfolgenden Abschaltens in Funktion des Abfalls der Leistung der Pumpe, wobei die Hydraulikmotoren sich mit einer quasi-konstanten einheitlichen Geschwindigkeit drehen, und daß die Hydraulikmotoren, wenn sie als Pumpe arbeiten, rückgespeist werden auf sich selbst und nur eine geringe Leistung verbrauchen, die von dem elektrischen Kreis über die Asynchronmaschine geliefert wird.

3. Anordnung nach Anspruch 2, dadurch gekennzeichnet, daß die Hydraulikpumpe (101) und/oder mindestens ein Teil der Hydraulikmotoren (102-104) einen veränderlichen Verdrängungsraum haben.

4. Anordnung nach Anspruch 2, dadurch gekennzeichnet, daß die Pumpe (101) und die n hydraulischen Motoren (102, 103, 104) einen festen Hubraum haben, daß die n hydraulischen Motoren identisch aufgebaut sind und jeder mit einem Rückschlagventil (115, 116, 117) versehen ist, die parallel auf dem entsprechenden hydraulischen Motor befestigt sind, während das Versorgungssystem der hydraulischen Motoren derart ist, daß, wenn die Leistung der Pumpe die gemeinschaftliche Leistung d von einem der genannten n hydraulischen Motoren erreicht, der erste (102) von diesen wird versorgt, eine doppelte Leistung die Versorgung des ersten (102) und von einem zweiten Motor (103) zur Folge hat und dementsprechend bei einer Leistung n × d die Versorgung des letzten (104) der n hydraulischen Motoren erfolgt, wobei die Verminderung der Ausgangsleistung der Pumpe umgekehrt die aufeinanderfolgende Abschaltung der n hydraulischen Motoren von dem letzten versorgten hydraulischen Motor bewirkt.

5. Anordnung nach Anspruch 4, dadurch gekennzeichnet, daß das Versorgungssystem der n hydraulischen Motore n + 1 Druckbegrenzungsventile (109, 110, 111, 112) und Mittel (113) zum Steuern der Ventile auf denselben Druck aufweist, wobei ein erstes Ventil (109) stromauf von der ersten Zuleitung, ein letztes Ventil (112) hinter der letzten Zuleitung und jedes der anderen Ventile (110, 111) zwischen zwei aufeinanderfolgenden Zuleitungen derart angeordnet ist, daß das erste Ventil (109) den Staudruck der Pumpe (101) reguliert bis dieser die Leistung des ersten hydraulischen Motors (102), für welchen das Ventil sich vollständig öffnet, erreicht, das zweite Ventil (110) in Übernahme der Regelrolle und dann folgend bis zu der vollständigen Öffnung von dem vor dem letzten Ventil (111), das dann die Versorgung des letzten hydraulischen Motors (104) übernimmt, der im Druck durch das letzte Ventil (112) reguliert wird.

6. Anordnung gem. einem der Ansprüche 4 und 5, dadurch gekennzeichnet, daß der Hubraum der Pumpe (101) und der n hydraulischen Motoren (102 bis 104) derart gewählt sind, daß mit einer Maximalgeschwindigkeit des zu prüfenden Motors (100) die Leistung der hydraulischen Pumpe im wesentlichen gleich ist mit (n + 1) × d.

7. Hydraulische Anordnung zur Wiedergewinnung der Energie von einem Motorprüfstand in Form elektrischer Energie unter Verwendung einer hydraulischen Verdrängerpumpe (201), welche mit einem einen hydraulischen Verdrängermotor enthaltenden hydraulischen Kreis verbunden ist, und mit einer elektrischen Asynchronmaschine (205) an einem elektrischen Speisenetz, wobei die Pumpe an die Welle des Prüfmotors (200) angekuppelt ist, die sich mit einer variablen Geschwindigkeit dreht und wobei der hydraulische Motor angekuppelt ist an die Welle der Asynchronmaschine derart, daß der hydraulische Motor hydraulisch gespeist wird durch die Pumpe und abhängig von der Leistung der Pumpe die Asynchronmaschine antreibt, die dann von dem Motorbetrieb auf den Generatorbetrieb umschaltet, dadurch gekennzeichnet, daß der hydraulische Stromkreis ein Drucköllreservoir (206) enthält, welches mit der Pumpe (201) verbunden ist, daß n hydraulische Verdrängermotore (202-204) in Verbindung mit der Welle der Asynchronmaschine vorgesehen sind, daß jeder hydraulische Motor angeschlossen ist an eine Abzweigung des hydraulischen Stromkreises, wobei die Abzweigungen parallel untereinander angeordnet sind, indem ein erster hydraulischer Motor (204) verbunden ist über eine erste Abzweigung, die vorhanden ist in dem hydraulischen Kreis beginnend von der Pumpe und dann bis zu dem letzten hydraulischen Motor (202), der an der letzten Abzweigung angeschlossen ist, daß die Pumpe (201) und die n hydraulischen Motore mit einem festen Hubraum versehen sind, wobei der Hubraum von einem der hydraulischen Motoren (202), im folgenden kleiner Motor genannt, gleich sein soll mit der Hälfte des jeweils gleichen Hubraums der anderen hydraulischen Motore (203 und 204), im folgenden große Motoren genannt, von denen jeder eine Leistung d hat, wobei weiter je ein Rückschlagventil (215, 216, 217) angeordnet ist, parallel zu jedem hydraulischen Motor derart, daß das Versorgungssystem der hydraulischen Motore so ist, daß, wenn die Leistung der Pumpe (201) den Wert d/2 des kleinen Motors (202) erreicht, dieser versorgt wird, bei Erreichen einer doppelten Leistung d der Pumpe einer der großen Motoren (203 oder 204) angeschaltet und die Versorgung des kleinen Motors gesperrt wird und im folgenden derart, daß eine Leistung der Pumpe gleich einem ganzzahligen Vielfachen von d/2 mit sich bringt, daß der kleine Motor angehalten und eine Zahl der großen Motore gleich der Hälfte von diesem Vielfachen versorgt sind, während eine Leistung gleich einem ungeraden Vielfachen von d/2 eine Versorgung des kleinen Motors und einer Anzahl der großen Motore gleich mit diesem Vielfachen minus 2 dividiert durch 2 ermöglicht.

8. Anordnung nach Anspruch 7, dadurch gekennzeichnet, daß der Hubraum der Pumpe (201) und der n hydraulischen Motore (202 bis 204) derart gewählt sind, daß bei der Maximalgeschwindigkeit des Prüfstandmotors (200) die Leistung der hydraulischen Pumpe etwa gleich ist mit n × d.

9. Anordnung nach einem der Ansprüche 7 und 8, dadurch gekennzeichnet, daß das Versorgungssystem der hydraulischen Motore zwei Druckbegrenzungsventile (209, 210) aufweist, die mit Steuermitteln (213) verbunden sind und die strömungsmäßig oberhalb bzw. unterhalb von der Versorgungsabzweigung des kleinen Motors (202) angeordnet sind und daß je ein Elektroventil (218, 219) in jede Versorgungsabzweigung eines großen Motors (203, 204) eingebaut ist, während zwei Druck- und Steuerdetektoren in Abhängigkeit der Leistung für das Öffnen bzw. des Schließens der Elektroventile derart vorgesehen sind, daß das Stromaufventil (209) den Staudruck der Pumpe (201) reguliert, bis daß die Leistung von diesem letzteren die Leistung d/2 des kleinen Motors (202) erreicht, bei welcher das Ventil sich vollständig öffnet zur Versorgung des kleinen Motors mit Regulierung durch das nachgeschaltete Ventil (210), daß eine doppelte Leistung d nach Abtastung eines Druckabfalls entsprechend einer Leistung d/2 durch den Öffnungsdetektor, dann das Öffnen eines ersten Elektroventils (218 oder 219) steuert mit der Folge der Speisung eines der grossen Motore (203 oder 204) derart, daß der Druck reguliert wird durch das Stromaufventil und so weiter derart, daß eine Leistung der Pumpe gleich einem ganzzahligen Vielfachen von d/2 das Öffnen von einer Anzahl von Elektroventilen gleich der Hälfte von diesem Vielfachen mit Druckregelung durch das Stromaufventil (209) zur Folge hat, während eine Leistung gleich einem ungeraden Vielfachen von d/2 das Öffnen des Stromaufventils (209) und damit die Speisung des kleinen Motors zur Folge hat, während das Öffnen von einer Zahl von Elektroventilen gleich mit diesem Vielfachen weniger 1 dividiert durch 2 mit einer Druckregulierung durch das Stromabventil (210) auslöst.

10. Anordnung nach Anspruch 9, dadurch gekennzeichnet, daß die beiden Druck- und Steuerdetektoren der Elektroventile stromauf vor den Ventilen (209 und 210) bzw. in dem Steuerkreis von diesen zur Steuerung des Öffnens bzw. des Schließens der Elektroventile in Funktion der Leistung angeordnet sind, um das Anschalten bzw. Abtrennung der großen Motore zu ermöglichen.

11. Anordnung nach Anspruch 10, dadurch gekennzeichnet, daß jeder Detektor einen Manostat (220, 223) zur Steuerung des Öffnens bzw. des Schließens der Elektroventile (218, 219) sowie eine zur Betätigung des Manostaten bestimmte Restriktion (221, 225) aufweist zum Erzeugen eines genügend großen Druckabfalls entsprechend der Leistung.

12. Anordnung nach einem der Ansprüche 2-11, dadurch gekennzeichnet, daß der hydraulische Kreis darüberhinaus einen Öl-Wasser- oder Öl-Luft-Wärmetauscher (107, 207) aufweist zum Absaugen schwacher Verlustleistung in Form von Wärme, und daß ein Filter (108, 208) im Rücklauf zum Reservoir (106, 206) angeordnet ist.

Fig:1

Fig: 2

PUISSANCE

Cpf

Cpr

VITESSE
MOTEUR

$\frac{N}{4}$   $\frac{N}{2}$   $\frac{3N}{4}$   N

P   $\frac{3P}{4}$   $\frac{P}{2}$   $\frac{P}{4}$

Fig: 4

PUISSANCE

C'pf

C'pr

VITESSE
MOTEUR

$\frac{N}{6}$   $\frac{N}{3}$   $\frac{N}{2}$   $\frac{2N}{3}$   $\frac{5N}{6}$   N

P   $\frac{2P}{3}$   $\frac{P}{3}$

**Fig.3**